# EUROPÄISCHE PATENTSCHRIFT

(11) **EP 2 161 128 B1**
(45) Veröffentlichungstag und Bekanntmachung des Hinweises auf die Patenterteilung: **11.07.2012**
(21) Anmeldenummer: 09168817.6
(22) Anmeldetag: 27.08.2009
(51) Int. Cl.: B32B 43/00, B32B 37/14, B29C 73/00, B32B 27/32

(54) **Verfahren zum Behandeln der Oberfläche von Faserverbundplatten**
Method for treating the surface of fibre composite boards
Procédé de traitement de la surface de plaques composites en fibres

(30) Priorität: 08.09.2008 CH 14352008
(43) Veröffentlichungstag der Anmeldung: 10.03.2010
(73) Patentinhaber: Quadrant Plastic Composites AG, 5600 Lenzburg (CH)
(72) Erfinder: Zingraff, Joëlle, 8006 Zürich (CH); Adamo, Nicola, 20154 Milano (IT); Baser, Burak, 4663 Aarburg (CH); Urban, Dieter, 5000 Aarau (CH)
(74) Vertreter: Schmauder & Partner AG Patent- & Markenanwälte VSP

(56) Entgegenhaltungen:
- EP-A2- 1 857 611
- WO-A1-2008/130329
- GB-A- 2 092 063

## Beschreibung

Die Erfindung betrifft ein Verfahren zum Behandeln von zerkratzten oder porösen Oberflächen ebener Faserverbundplatten aus einer Kernschicht aus Luftporen enthaltendem, vorzugsweise glasfaserverstärktem Polypropylen einer Dichte von weniger als 1.0 g/cm³ und einer Dicke von mehr als 3 mm, und mindestens einer damit verbundenen Deckschicht aus kompaktem, vorzugsweise glasfaserverstärktem Polypropylen mit einer Dicke von 0.5 bis 3 mm.

Faserverbundplatten mit einer Kernschicht aus einem Leicht-Kunststoff und Deckschichten aus kompaktem, faserverstärktem thermoplastischem Kunststoff sind bekannt. So ist zum Beispiel in der WO-A 2006/133586 eine biegesteife Verbundplatte mit vorzugsweise zwei Deckschichten aus kompaktem, glasfaserverstärktem Polypropylen und einer Kernschicht aus glasfaserverstärktem Polypropylen mit einem Gehalt an Luftporen von 20 bis 80 Vol.-% beschrieben. Derartige verzugsfreie Verbundplatten können u.a. im Bauwesen als Holzersatz verwendet werden, insbesondere im Aussenbereich, wo sie im Gegensatz zu Holz gegenüber Regen und grösseren Temperaturschwankungen unempfindlich sind.

Eine besonders interessante Anwendung sind Schaltafeln, bei denen in einem Metallrahmen die Verbundplatten als Schalbretter fixiert sind. Derartige Schaltafeln können z.B. je nach Anwendung 0.1 bis 4.0 m breit und 0.5 bis 6.0 m lang sein. Bei derartigen Schaltafeln können aber bei längerem Gebrauch beim Verladen, beim Transport und insbesondere beim Verlegen der Armierungseisen auf den Platten vor dem Vergiessen mit Beton Kratzer entstehen. Diese können z.B. 1 bis 3 mm breit und bis zu 2 mm tief sein. Ein ähnliches Problem tritt bei Verbundplatten auf, die von einer nicht einwandfreien Herstellung her an der Oberfläche Poren oder Einfallstellen aufweisen.

Der Erfindung lag nun die Aufgabe zugrunde, die Oberfläche derartiger zerkratzter oder poröser Verbundplatten so zu behandeln, dass sie wieder glatt und z.B. für weitere Sichtbeton-Arbeiten verwendbar werden.

Diese Aufgabe wird erfindungsgemäss dadurch gelöst, dass man auf die zerkratzte bzw. poröse Oberfläche eine 25 bis 1000 µm dicke Polypropylenfolie und/oder Polypropylenpulver einer mittleren Korngrösse von 50 bis 500 µm heiss aufpresst. Vorzugsweise hat die Verbundplatte zwei Deckschichten, wobei bei Schaltafeln nur bei einer, dem Beton zugewandten Deckschicht Kratzer entstehen können, welche die erfindungsgemässe Behandlung notwendig machen.

In der WO 2007/093158 ist ein Verfahren zur Reparatur von Schaltafeln beschreiben, die aus einer Kernschicht aus Schaumkunststoff, Zwischenschichten aus Metallfolien und Deckschichten aus einem thermoplastischen Kunststoff bestehen. Bei der Behandlung wird zunächst eine Oberflächenschicht abgetragen, z.B. abgeschält, dann wird darauf ein thermoplastischer Kunststoff, dessen Schmelztemperatur wesentlich niedriger ist als die des Thermoplasten der Deckschicht, aufgetragen, z.B. durch Giessen, Sprühen oder durch Pulverbeschichtung. Dieses recht aufwändige Verfahren erfordert mit dem Abschälen einen besonderen Arbeitsgang, der sehr präzise ausgeführt werden muss. Im Gegensatz dazu ist das erfindungsgemässe Verfahren wesentlich einfacher.

Als Luftporen enthaltende Kernschicht ist glasfaserverstärktes Polypropylen mit einem Glasgehalt von 30 bis 80 Gew.-% und einem Gehalt an Luftporen von 20 bis 80, vorzugsweise 30 bis 70 Vol.-%, bevorzugt. Dieses kann z.B. nach einem in der WO 2006/105682 beschriebenen Verfahren hergestellt werden durch Vermischen von Polypropylenfasern und Glasfasern, Vernadeln des Mischvlieses, Erwärmen auf Temperaturen oberhalb des Erweichungspunktes des Polypropylens und Verpressen, zum Beispiel in einer Doppelbandpresse bei relativ niedrigen Drücken.

Bei einem anderen Verfahren werden Polypropylenfolien oder Polypropylenpulver mit kurzen Verstärkungsfasern in wässriger Suspension vermischt, das Wasser wird abgepresst, und die erhaltene Platte wird getrocknet und heiss verpresst.

Luftporenhaltige Verbundplatten sind bekannt und als Bahnen oder Platten mit einer Breite von bis zu 2.3 m im Handel erhältlich, z.B. SymaLITE der Quadrant Plastic Composites AG, SEEBERLITE der Röchling Automotive AG, ACOUSTI-MAX der Owens Corning Corp., SUPERLITE von HanWha und KARAMTEC der Karam Tech Corporation. Die Kernschicht ist mehr als 3 mm, vorzugsweise 5 bis 10 mm dick, und hat eine Dichte von weniger als 1.0 g/cm³, vorzugsweise von 0.3 bis 0.6 g/cm³. Grundsätzlich kann die Kernschicht auch glasfaserfreies, expandiertes Polypropylen sein, das z.B. durch Schaumextrusion von Treibmittel enthaltendem Polypropylen oder durch Versintern von Polypropylen-Schaumpartikeln hergestellt werden kann.

Die Deckschichten bestehen aus Polypropylen, das vorzugsweise mit Glasfasern verstärkt ist. Dies können z.B. vernadelte Wirrglasfasern sein, was die sogenannten GMT-Platten ergibt, oder vernadelte unidirektionale Endlosfasern, sowie Kombinationen, bei denen Wirrglasfasern mit unidirektionalen Endlosfasern zusammengenadelt sind. Besonders bevorzugt als Verstärkungsfasern ist die Kombination eines Glasfasergewebes, welches mit Schnittglasfasern oder mit einer Glasfasermatte vernadelt ist (MULTI Q der Quadrant Plastic Composites AG). Die Deckschichten enthalten im allgemeinen 20 bis 60, vorzugsweise 25 bis 50 Gew.-% Glasfasern. Sie sind 0.5 bis 3 mm, vorzugsweise 1.0 bis 2.0 mm dick. Grundsätzlich können die Deckschichten auch aus glasfaserfreiem Polypropylen bestehen oder aus mit Polypropylen- oder Polyethylenfolien beschichteten Sperrholzplatten.

Die erfindungsgemässe Behandlung der zerkratzen oder porösen Oberfläche umfasst im Fall der Behandlung von Schaltafeln vorzugsweise folgende Schritte:
- Die zerkratzte oder poröse Oberfläche der Deckschicht wird von anhaftendem Beton, Schmutz und Öl mechanisch gesäubert, z.B. mit rotierenden Bürsten oder Hochdruckreinigern.
- Auf die Oberfläche wird erst eine 25 bis 1000 µm, vorzugsweise 200 bis 600 µm, insbesondere etwa 300 µm dicke Polypropylenfolie aufgelegt, die - um besondere Effekte zu erzielen - auch eingefärbt oder strukturiert sein kann. Statt einer reinen Polypropylenfolie kann auch eine Mehrschichtfolie Polypropylen/Polyamid oder Polypropylen/Copolypropylen aufgelegt werden, wobei die Polypropylenschicht stets auf der Oberfläche der Faserverbundplatte zu liegen kommt. Die Schmelztemperatur des Polypropylens der Folie sollte vorzugsweise in derselben Grössenordnung liegen wie die des Polypropylens der Deckschicht, insbesondere sollte sie um höchstens 5°C von dieser abweichen.
- Darauf wird dann eine dünne, z.B. 2 bis 20 mm dicke Stahl- oder Aluminiumplatte gelegt. Diese Metallplatte hat etwas kleinere Dimensionen als der Metallrahmen der Schaltafel, so dass das Schalbrett nicht aus dem Rahmen genommen werden muss.
- In einer 180 bis 250°C heissen Presse wird die belegte Schaltafel 20 bis 600 sec, vorzugsweise 120 bis 360 sec lang mit einem Druck von 0.5 bis 20 bar, vorzugsweise von 1 bis 5 bar gepresst. Dabei erweicht die Polypropylenfolie und auch die Oberfläche des Schalbretts, so dass Polypropylen in die Kratzer bzw. Poren eindringen kann und diese verschliesst und verschweisst.
- Schliesslich wird die Schaltafel in einer kalten Presse 20 bis 600 sec, vorzugsweise 120 bis 360 sec lang gepresst, so dass sie auf eine Temperatur unterhalb von 60°C abkühlt. Dabei wird die Oberfläche glatt gepresst.

Im zweiten Schritt kann - statt eine Polypropylenfolie aufzulegen - ein Polypropylenpulver einer mittleren Korngrösse von 50 bis 500 µm aufgestreut werden, z.B. mit handelsüblichen Pulverstreuern. Das Polypropylenpulver ist vorzugsweise UV- stabilisiert und farblich angepasst. Die Verwendung von Pulver statt einer Folie hat beim anschliessenden Heissverpressen den Vorteil, dass keine Lufteinschlüsse entstehen können. Schliesslich kann auch zuerst Polypropylenpulver zum Egalisieren der Oberfläche aufgestreut und dann eine Polypropylenfolie oder eine Mehrschichtfolie aufgelegt werden.

Das Verfahren wird vorzugsweise diskontinuierlich durchgeführt, wobei entweder in einer einzigen Presse gearbeitet wird, die erst erwärmt und dann gekühlt wird, oder in zwei Pressen, von denen die erste erwärmt und die zweite gekühlt wird. Grundsätzlich kann das Verfahren auch kontinuierlich, z.B. auf einer Doppelbandpresse mit einer Heiz- und einer Kühlzone durchgeführt werden.

Von Vorteil ist, dass das Schalbrett nicht aus dem Rahmen genommen werden muss, d.h. man kann die komplette Schaltafel der erfindungsgemässen Behandlung unterziehen. Ausserdem braucht die zerkratzte Oberfläche nicht abgeschält werden und es brauchen keine Klebesysteme angewandt werden.

Das erfindungsgemässe Verfahren wird vorzugsweise bei Schaltafeln angewandt. Aber auch zerkratzte Oberflächen von PKW- oder LKW-Ladewänden, von Verkleidungsplatten, sowie von mobilen Bühnen können so behandelt werden.

## Patentansprüche

1. Verfahren zum Behandeln von zerkratzten oder porösen Oberflächen ebener Faserverbundplatten aus einer Luftporen enthaltenden Kernschicht mit einer Dichte von weniger als 1.0 g/cm³ und einer Dicke von mehr als 3 mm aus Polypropylen, und mindestens einer 0.5 bis 3.0 mm dicken Deckschicht aus kompaktem Polypropylen oder mit Polypropylen- oder Polyethylenfolien beschichteten Sperrholzplatten, **dadurch gekennzeichnet, dass** man auf die zerkratzte bzw. poröse Oberfläche eine 25 bis 1000 µm dicke Polypropylenfolie und/oder Polypropylenpulver einer mittleren Korngrösse von 50 bis 500 µm heiss aufpresst.

2. Verfahren nach Anspruch 1, **dadurch gekennzeichnet, dass** die Faserverbundplatte zwei Deckschichten aufweist, von denen nur eine der Behandlung unterworfen wird.

3. Verfahren nach Anspruch 2, **dadurch gekennzeichnet, dass** die Kernschicht und die Deckschichten jeweils aus glasfaserverstärktem Polypropylen bestehen.

4. Verfahren nach Anspruch 3, **dadurch gekennzeichnet, dass** zerkratzte bzw. poröse Oberflächen von Schaltafeln behandeln werden, wobei die Behandlung folgende Schritte umfasst:
- die zerkratzte bzw. poröse Oberfläche wird mechanisch gesäubert,
- auf die Oberfläche wird erst die Polypropylenfolie und darauf eine dünne Metallplatte aufgelegt,
- die belegte Schaltafel wird heiss verpresst, und
- in einer kalten Presse abgekühlt.

5. Verfahren nach Anspruch 3, **dadurch gekennzeichnet, dass** zerkratzte bzw. poröse Oberflächen von Schaltafeln behandelt werden, wobei die Behandlung folgende Schritte umfasst:
- die zerkratzte bzw. poröse Oberfläche wird mechanisch gesäubert,
- auf die Oberfläche wird erst Polypropylenpulver aufgestreut und darüber eine dünne Metallplatte aufgelegt,
- die belegte Schaltafel wird heiss verpresst, und
- in einer kalten Presse abgekühlt.

6. Verfahren nach Anspruch 3, **dadurch gekennzeichnet, dass** zerkratzte bzw. poröse Oberflächen von Schaltafeln behandelt werden, wobei die Behandlung folgende Schritte umfasst:
- die zerkratzte bzw. poröse Oberfläche wird mechanisch gesäubert,
- auf die Oberfläche wird erst Polypropylenpulver aufgestreut und dann eine Polypropylenfolie aufgelegt und darüber eine dünne Metallplatte aufgelegt,
- die belegte Schaltafel wird heiss verpresst, und
- in einer kalten Presse abgekühlt.

7. Verfahren nach einem der vorhergehenden Ansprüche, **dadurch gekennzeichnet, dass** auf die Oberfläche statt einer reinen Polypropylenfolie eine Mehrschichtfolie Polypropylen/Polyamid oder Polypropylen/Copolypropylen aufgebracht wird, wobei die Polypropylenschicht stets auf der Oberfläche zu liegen kommt.

## Claims

1. A method for treating scratched or porous surfaces of planar fiber composite sheets comprising a core layer of polypropylene containing air voids and having a density of less than 1.0 g/cm³ and a thickness of more than 3 mm, and further comprising at least one cover layer with a thickness of 0.5 to 3.0 mm made of compact polypropylene or of plywood sheets coated with polypropylene or polyethylene foils, **characterized in that** a polypropylene foil with a thickness of 25 to 1000 µm and/or polypropylene powder with an average grain size of 50 to 500 µm is heat pressed onto the scratched or porous surface.

2. The method according to claim 1, **characterized in that** the fiber composite sheet comprises two cover layers, wherein only one of them is subject to the treatment.

3. The method according to claim 2, **characterized in that** the core layer and the cover layer each consist of glass fiber reinforced polypropylene.

4. The method according to claim 3, **characterized in that** scratched or porous surfaces of formwork boards are treated, wherein the treatment comprises the following steps:
- the scratched or porous surface is mechanically cleaned,
- firstly the polypropylene foil is put onto the surface, and a thin metal sheet is put thereon,
- the covered formwork board is heat pressed, and
- cooled in a cold press.

5. The method according to claim 3, **characterized in that** scratched or porous surfaces of formwork boards are treated, wherein the treatment comprises the following steps:
- the scratched or porous surface is mechanically cleaned,
- firstly polypropylene powder is strewn onto the surface, and a thin metal sheet is put thereon,
- the covered formwork board is heat pressed, and
- cooled in a cold press.

6. The method according to claim 3, **characterized in that** scratched or porous surfaces of formwork boards are treated, wherein the treatment comprises the following steps:
- the scratched or porous surface is mechanically cleaned,
- firstly polypropylene powder is strewn onto the surface, and then a polypropylene foil is put thereon, and on top of it a thin metal sheet is put thereon,
- the covered formwork board is heat pressed, and
- cooled in a cold press.

7. The method according to to any one of the preceding claims, **characterized in that** instead of pure polypropylene foil a multi-layer foil of polypropylene/polyamide or polypropylene/copolypropylene is applied onto the surface, wherein the polypropylene layer always comes to lie on the surface.

## Revendications

1. Procédé de traitement de surfaces éraflées ou poreuses de plaques composites en fibres comportant une couche noyau renfermant des cavités ayant une densité inférieure à 1,0 g/cm³ et une épaisseur supérieure à 3 mm, réalisée en polypropylène, et au moins une couche de recouvrement de 0,5 à 3,0 mm d'épaisseur réalisée en polypropylène compact ou constituée par des plaques de contreplaqué recouvertes de feuilles de polypropylène ou de polyéthylène,
**caractérisé en ce qu'**
on comprime ou presse à chaud sur la surface éraflée ou poreuse une feuille de polypropylène de 25 à 1000 µm d'épaisseur et/ou une poudre de polypropylène ayant une granulométrie moyenne de 50 à 500 µm.

2. Procédé conforme à la revendication 1,
**caractérisé en ce que**
la plaque composite en fibres comporte deux couches de recouvrement dont une seule a été soumise au traitement.

3. Procédé conforme à la revendication 2,
**caractérisé en ce que**
la couche noyau et les couches de recouvrement sont chacune constituées par du polypropylène renforcé par des fibres de verre.

4. Procédé conforme à la revendication 3,
**caractérisé en ce qu'**
on traite des surfaces éraflées ou poreuses de tableaux de bord, ce traitement comportant les étapes suivantes :
- nettoyage mécanique de la surface éraflée ou poreuse,
- application sur la surface de la feuille de polypropylène, puis sur cette feuille d'une plaque métallique mince,
- moulage par pression du tableau de bord ayant reçu cette application, et
- refroidissement dans une presse froide,

5. Procédé conforme à la revendication 3,
**caractérisé en ce qu'**
on traite des surfaces éraflées ou poreuses de tableaux de bord, ce traitement comportant les étapes suivantes :
- nettoyage mécanique de la surface éraflée ou poreuse,
- dispersion d'une poudre de polypropylène sur cette surface, puis application sur celle-ci d'une mince plaque métallique,
- moulage par pression à chaud du tableau de bord ayant reçu cette application, et
- refroidissement dans une presse froide.

6. Procédé conforme à la revendication 3,
**caractérisé en ce qu'**
on traite des surfaces éraflées ou poreuses de tableau de bord, ce traitement comportant les étapes suivantes :
- nettoyage mécanique de la surface éraflée ou poreuse,
- dispersion ou saupoudrage d'une poudre de polypropylène sur cette surface, puis application sur celle-ci d'une feuille de polypropylène et application d'une plaque métallique mince sur cette feuille,
- compression à chaud du tableau de bord ayant subi cette application, et
- refroidissement dans une presse à froid.

7. Procédé conforme à l'une des revendications précédentes,
**caractérisé en ce qu'**
on applique sur la surface, au lieu d'une feuille de polypropylène pur, une feuille multicouches en polypropylène/polyamide ou polypropylène/copolypropyléne, la couche de polypropylène étant toujours appliquée sur la surface.
